# EUROPÄISCHE PATENTSCHRIFT

(11) **EP 1 427 603 B1**
(45) Veröffentlichungstag und Bekanntmachung des Hinweises auf die Patenterteilung: **07.12.2005**
(21) Anmeldenummer: 02777012.2
(22) Anmeldetag: 06.09.2002
(51) Int. Cl.: B60N 2/427

(54) **RÜCKENLEHNE FÜR FAHRZEUGSITZ**
BACKREST FOR A VEHICLE SEAT
DOSSIER DE SIEGE DE VEHICULE

(30) Priorität: 10.09.2001 DE 20114944 U; 18.10.2001 DE 10150899
(43) Veröffentlichungstag der Anmeldung: 16.06.2004
(73) Patentinhaber: Johnson Controls GmbH, 51399 Burscheid (DE)
(72) Erfinder: THUNNISSEN, Jan, NL-5861 DD Wanssum (NL); KRÄMER, Bernd, 53947 Zingsheim (DE); HARTLAUB, Silvio, 51069 Köln (DE)
(74) Vertreter: Hemmelmann, Klaus
(86) Internationale Anmeldenummer: PCT/EP2002/009965
(87) Internationale Veröffentlichungsnummer: WO 2003/022624

(56) Entgegenhaltungen:
- EP-A- 0 888 926
- EP-A- 0 982 186
- DE-A- 19 738 201
- DE-A- 19 938 904
- DE-C- 19 924 236
- DE-U- 29 603 991
- US-A- 5 927 804

## Beschreibung

Die Erfindung betrifft eine Rückenlehne für einen Fahrzeugsitz, mit einer unter der Wirkung einer bei einer Unfallsituation wirkenden Krafterzeugungseinrichtung von einer Gebrauchslage in eine Sicherheitsstellung verstellbaren Kopfstütze, welche über in die Rückenlehne ragende Halteelemente mit derselben verbunden ist, wobei die Halteelemente unter der Wirkung der Krafterzeugungseinrichtung gegenüber der Rückenlehne mittels mindestens einer Kulissenführung aus einer Kulisse und in dieser geführtem Kulissenstein verschiebbar sind.

Fahrzeuginsassen sind bereits bei einem relativ leichten Heckaufprall der Gefahr ausgesetzt, unter der Wirkung unfallbedingter Beschleunigungskräfte eine Überdehnung der Halswirbelsäule zu erleiden. Starr mit der Rückenlehne des Fahrzeugsitzes verbundene Kopfstützen vermögen die Verletzungsgefahr zwar zu reduzieren, sie befinden sich in der Gebrauchsstellung jedoch aus Komfortgründen zu weit vom Kopf entfernt, um Verletzungen im Nackenbereich wirksam zu verhindern. Dies gilt auch dann, wenn die Kopfstütze, der Größe des Fahrzeuginsassen entsprechend, durch Verschieben ihrer Führungsstangen in den Führungshülsen der Rückenlehne auf die korrekte Höhe eingestellt wurde.

Zur Verbesserung des Insassenschutzes wurden daher Sicherheitseinrichtungen entwickelt, die eine im Falle eines Heckaufpralls selbsttätig von der Gebrauchslage in eine Sicherheitsstellung schwenkbare Kopfstütze aufweisen, wodurch deren Abstand zum Kopf des Insassen verringert wird. Derartige Systeme werden, sofern die Verstellung in die Sicherheitsstellung durch die auf den Sitz wirkenden Beschleunigungskräfte des Insassen herbeigeführt wird, als "passive Kopfstütze" bezeichnet. Wird der Erzeuger der Verstellkraft hingegen aus einer gesonderten Energiequelle gespeist, ist das Sicherheitssystem mit einer "aktiven" Kopfstütze versehen.

### Stand der Technik

Aus der Druckschrift DE 296 03 991 U1 ist eine solche passive Kopfstütze bekannt. In der Rückenlehne ist ein sich von ihrer Unter- zur Oberkante erstreckendes, biegsames Zugelement angeordnet, welches infolge der Massenträgheit des Sitzinsassen bei einem Unfall nach hinten gedehnt wird und, da es an seinem unteren Ende fest mit der Rückenlehne verbunden ist, an seinem oberen Ende eine nach unten gerichtete Zugkraft erzeugt. Diese wird nach einem Ausführungsbeispiel dazu genutzt, eine in einer Kulisse schräg nach vorne verlagerbare Kopfstütze mittels einer Umlenkung in eine Hochstellung zu ziehen, in welcher sie sowohl nahe am Kopf des Sitzinsassen als auch in einer ausreichenden Höhenposition befindlich ist. Eine nachfolgende Arretierung der Kopfstütze in dieser Sicherheitsstellung ist nicht vorgesehen.

In der Offenlegungsschrift DE 197 38 201 A1 wird eine weitere Rückenlehne für einen Fahrzeugsitz beschrieben. Die passive Kopfstütze weist in die Rückenlehne ragende, zum Zwecke der Höhenverstellung in zwei zueinander beabstandeten Hülsen längsverschieblich und feststellbar geführte Führungsstangen auf. Die untere Hülse ist über ein Drehgelenk unmittelbar mit der Rahmenstruktur der Rückenlehne verbunden, während die obere Hülse über einen in Gebrauchsstellung angewinkelten Kniehebelmechanismus an der Rahmenstruktur angelenkt ist. Bei einem Unfall wird der Kniehebel gestreckt, wodurch sich die Führungsstangen um die Achse des unteren Drehgelenks drehen und die Kopfstütze in Richtung des Kopfes des Fahrzeuginsassen schwenkt. Zur Krafterzeugung dient eine im Lendenbereich der Rückenlehne angeordnete, in Gebrauchsstellung gekrümmte Blattfeder, die bei einem Unfall unter der Wirkung der Beschleunigung des Insassen durchgedrückt wird, wodurch sich der Abstand zwischen ihren Enden vergrößert. Diese Längung wird über einen Mechanismus auf den Kniehebel übertragen und verändert dessen Stellung in der zuvor beschriebenen Weise.

Diese Ausführung weist grundsätzlich den Nachteil auf, dass die Blattfeder je nach Sitzposition des Insassen unzureichend gelängt wird. Ferner ist die Höhe der aus Komfortgründen häufig recht niedrig eingestellten Kopfstütze bei Einnahme der Sicherheitsstellung nicht veränderbar.

Eine Rückenlehne mit einer aktiven Kopfstütze wird in der Offenlegungsschrift DE 199 38 904 A1 offenbart. Die Rückenlehne ist zweiteilig aufgebaut, wobei der untere Teil in herkömmlicher Weise mit dem Sitzteil des Fahrzeugsitzes verbunden ist, der obere Teil hingegen mit der Kopfstütze um eine quer zur Fahrzeuglängsachse verlaufende Achse gegenüber dem unteren Teil von einer Gebrauchsstellung in eine Sicherheitsstellung schwenkbar ist. Das hierzu erforderliche Drehmoment wird von einer auf einen Hebel wirkenden Druckfeder erzeugt, die in der Gebrauchsstellung des Sitzes gespannt und mittels einer Rasteinrichtung arretiert ist. Die bei einem Heckaufprall entstehenden Beschleunigungskräfte werden von einem Fahrzeug-Crash-Sensor erfasst. Eine Steuerungseinrichtung löst die Rasteinrichtung durch Auslösen eines pyrotechnischen Aktivators, sobald Beschleunigungswerte gemessen werden, die einen vorgegebenen Schwellenwert überschreiten.

Diese Einrichtung erfüllt die an sie gestellten Anforderungen im Hinblick auf die Sicherheit der Fahrzeuginsassen, ist jedoch mit einem relativ hohen konstruktiven Aufwand verbunden.

### Aufgabe

Der Erfindung liegt die Aufgabe zugrunde, eine Rückenlehne mit einer wirksamen und konstruktiv einfach aufgebauten Sicherheitseinrichtung bereitzustellen, mittels derer in der Sicherheitsstellung sowohl der Abstand zwischen Kopfstütze und Kopf des Insassen als auch die Höhe der Kopfstütze gegenüber der Gebrauchsstellung beeinflussbar sind und die beim Erreichen der Sicherheitsstellung arretiert und somit gegen eine ungewollte Rückverlagerung gesichert wird.

### Lösung

Die Aufgabe wird bei einer gattungsgemäßen Rückenlehne erfindungsgemäß dadurch gelöst, dass der Kulissenstein bei der Verschiebung von der Gebrauchsstellung in die Sicherheitsstellung eine Drehbewegung ausführt, infolge derer sich seine auf die Kulisse gerichtete radiale Erstreckung vergrößert, wodurch der Kulissenstein kraft- oder formschlüssig in der Kulisse arretierbar ist.

Weitere vorteilhafte Ausführungsformen sind in den Unteransprüchen angegeben.

### Figuren

Die Figuren stellen beispielhaft und schematisch Beispiele zum erleichterten Verständnis der Erfindung (Figuren 1 bis 3 und 6 bis 9) sowie eine Ausführung der Erfindung (Figuren 4 und 5) dar.

Es zeigen:

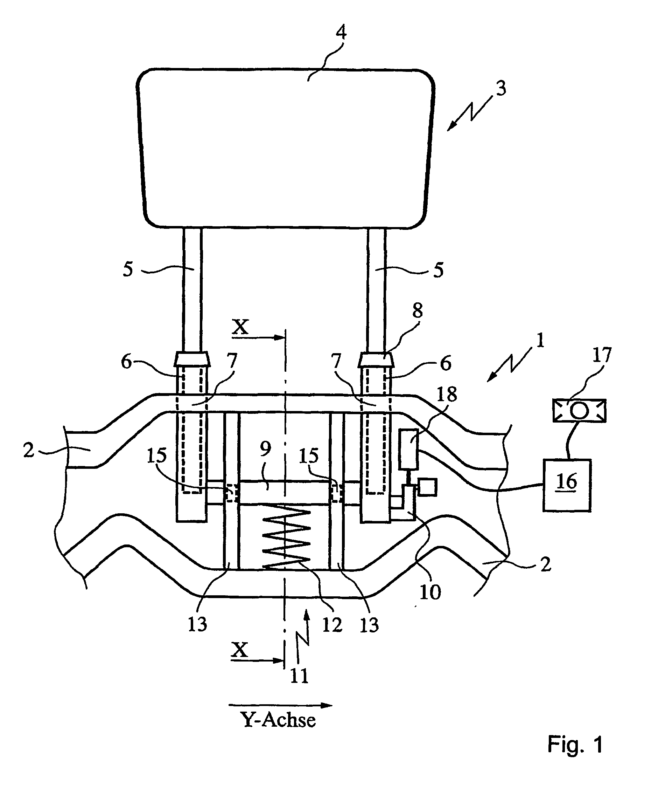

- Fig. 1: eine Rückansicht einer gattungsgemäßen Rückenlehne in Gebrauchsstellung

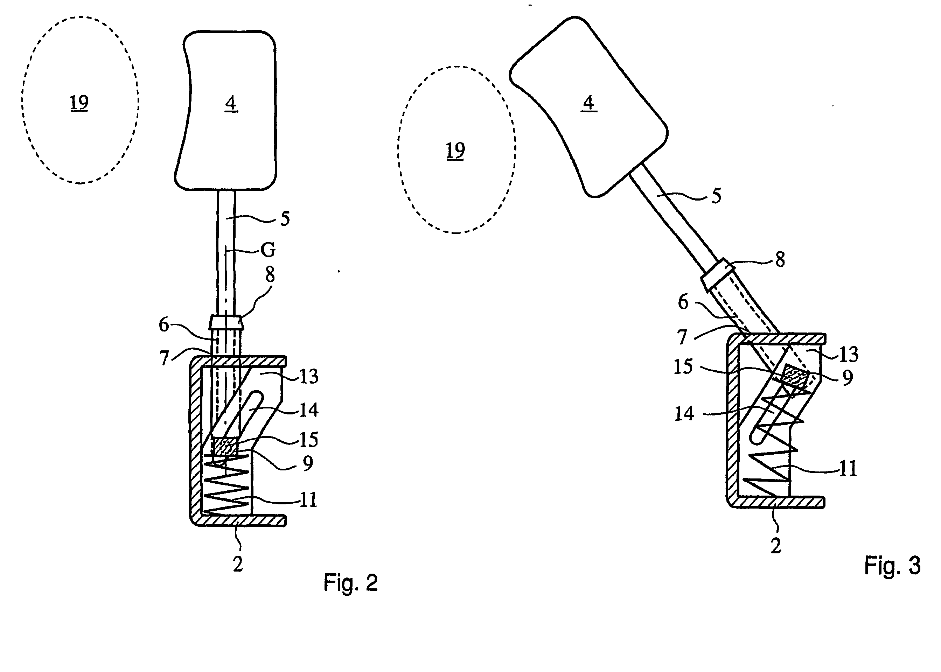

- Fig. 2: die Rückenlehne nach Figur 1 im Längsschnitt X-X
- Fig. 3: ein entsprechender Längsschnitt durch die Rückenlehne nach Erreichen der Sicherheitsstellung

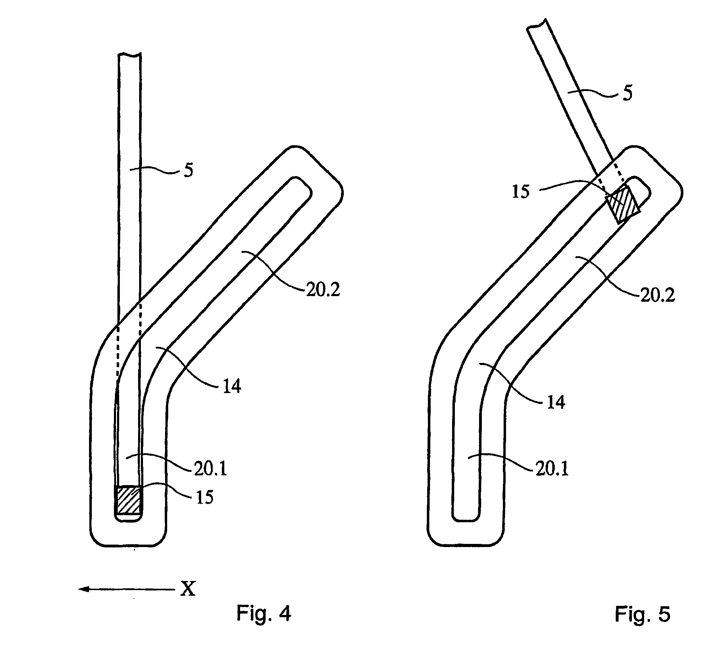

- Fig. 4: eine erfindungsgemäße Ausbildung von Kulisse und Kulissenstein in Gebrauchsstellung
- Fig. 5: die Ausführung nach Fig. 4 in Sicherheitsstellung

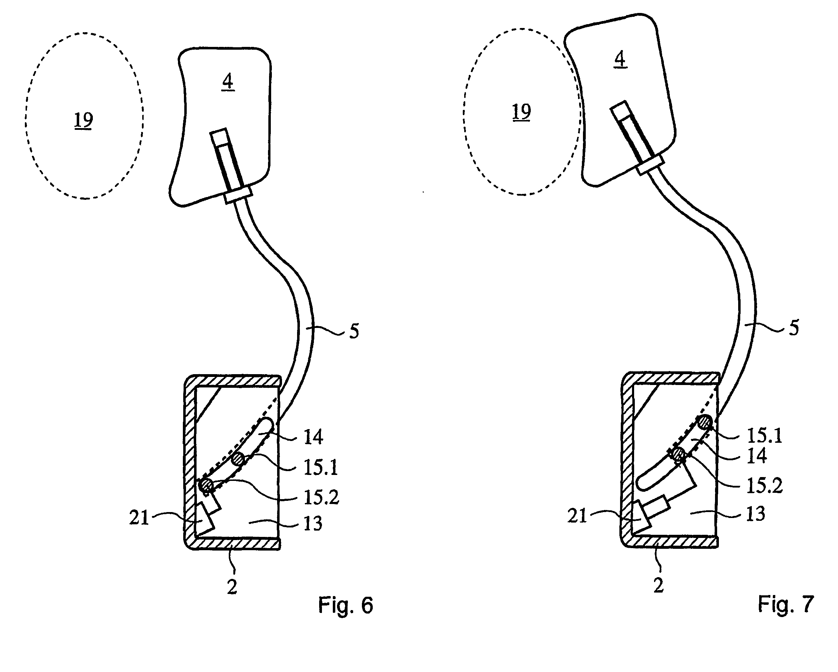

- Fig. 6: einen Längsschnitt durch eine andere gattungsgemäße Rückenlehne in Gebrauchsstellung
- Fig. 7: die Rückenlehne nach Fig. 6 in Sicherheitsstellung

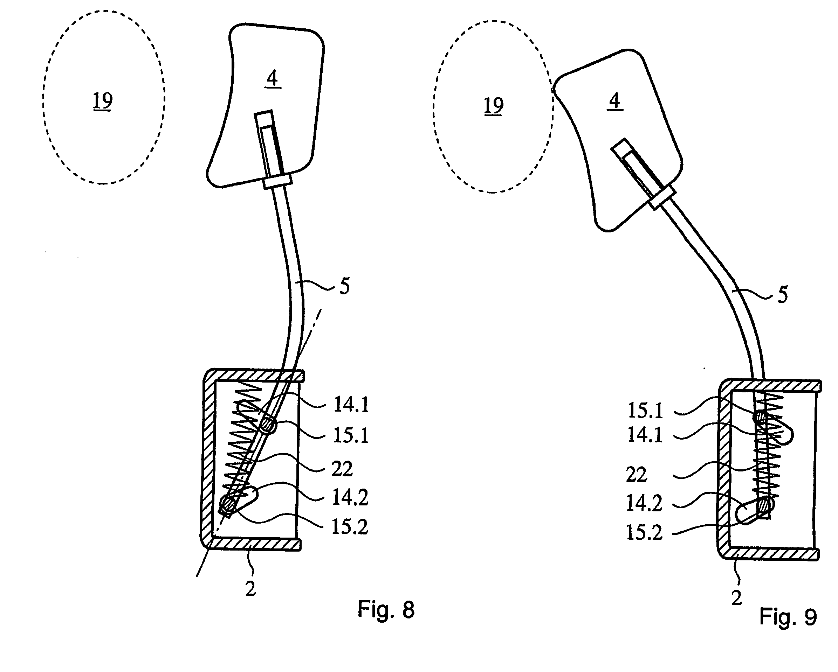

- Fig. 8: einen Längsschnitt durch eine weitere gattungsgemäße Rückenlehne in Gebrauchsstellung
- Fig. 9: die Rückenlehne nach Fig. 8 in Sicherheitsstellung

Die in Fig. 1 auszugsweise abgebildete Rückenlehne 1 besteht aus einer Rahmenstruktur 2 aus Metall, die im Gebrauch mit nicht dargestellten Polstermaterialien und Bezugsstoffen versehen ist. Im Ausführungsbeispiel ist der Querschnitt der Rahmenstruktur 2 U-förmig ausgebildet, wie aus den Figuren 2 und 3 ersichtlich.

In ihrem oberen Bereich ist die Rückenlehne 1 mit einer Kopfstütze 3 versehen, die aus einem Polsterteil 4 und zwei sich vertikal nach unten erstreckenden Führungsstangen 5 besteht. Die Führungsstangen 5 sind in Führungshülsen 6 längsverschieblich geführt, die ihrerseits in als Ausnehmungen 7 ausgebildeten Durchführungen durch die Rahmenstruktur 2 angeordnet sind. Zur Einstellung der Höhe des Polsterteils 4 relativ zur Rahmenstruktur 2 wird eine Raste 8 gelöst, so dass die Führungsstangen 5 nachfolgend in den Führungshülsen 6 nach oben oder nach unten verschoben werden können. Anschließend wird die Lage beider Bauteile zueinander durch die Raste 8 erneut festgestellt.

Die Führungshülsen 6 sind untereinander durch eine waagerecht angeordnete Strebe 9 verbunden. Sie sind in den im oberen Schenkel der Rahmenstruktur 2 befindlichen Ausnehmungen 7 nach oben verschieblich sowie um eine horizontale, quer zur Fahrtzeuglängsachse verlaufende Achse drehbar angeordnet, die üblicherweise als Y-Achse des Fahrzeugs bezeichnet wird. In der Gebrauchsstellung werden die Führungshülsen 6 durch eine Arretiereinrichtung 10 in der dargestellten Höhenlage gehalten. Zum grundsätzlichen Aufbau einer derartigen Arretiereinrichtung 10 wird auf den eingangs zitierten Stand der Technik verwiesen.

Die Arretiereinrichtung 10 hält eine Krafterzeugungseinrichtung 11 in Form einer Druckfeder 12 in Spannung, die sich einerseits auf dem unteren Schenkel des seitlich geöffneten U-Profils der Rahmenstruktur 2 abstützt und andererseits an der Strebe 9 angreift.

In die Rahmenstruktur 2 sind zwei in Blechplatten 13 eingearbeitete Kulissen 14 eingelassen, in welche in der Strebe 9 angeordnete kreisrunde Kulissensteine 15 eingreifen. Durch diesen Eingriff und die Lagerung der Führungshülsen 6 in den Ausnehmungen 7 ist die Kopfstütze 3 in Gebrauchsstellung grundsätzlich sicher in der Rahmenstruktur 2 gelagert.

Die Kulissen 14 sind gegenüber der Vertikalen in der Weise geneigt, dass sich die in ihnen geführten Kulissensteine 15 und damit auch die Strebe 9 bei einer Verschiebung nach oben zeitgleich nach hinten verlagern. Aus diesem Grund verläuft die Kulisse 14 gegenüber einer gedachten Geraden G, welche die Kulissensteine 15 in der Gebrauchsstellung mit den zugeordneten Ausnehmungen 7 verbinden, in einer entsprechenden Schräge.

Bei einem Heckaufprall zündet eine elektronische Steuerungseinrichtung 16 in Abhängigkeit von den von einem Crash-Sensor 17 gemessenen Beschleunigungswerten einen pyrotechnischen Aktivator 18, der seinerseits die Arretiereinrichtung 10 löst. Unter der Wirkung der sich entspannenden Druckfeder 12 verschieben sich die Strebe 9 und die mit ihr verbundenen Führungshülsen 6 nach oben. Durch die gleichzeitig auftretende, nach hinten gerichtete Verlagerung der Strebe 9 erfahren die Führungshülsen 6 ferner eine Drehbewegung, durch welche der aus der Rahmenstruktur 2 herausragende Teile der Führungsstangen 5 zum Kopf 19 des Fahrzeuginsassen geschwenkt werden. Der Abstand zwischen dem Polsterteil 4 und dem Kopf 19 verringert sich daher in der Sicherheitsstellung wunschgemäß.

Die Figuren 4 und 5 zeigen die erfindungsgemäße Ausbildung von Kulisse 14 und Kulissenstein 15, mit der eine Selbsthemmung der Führung bei Erreichen der Sicherheitsstellung herbeiführbar ist. Die Kulisse 14 besteht aus einem ersten, im Wesentlichen vertikal verlaufenden Abschnitt 20.1, an welchen sich nach oben ein schräger zweiter Abschnitt 20.2 anschließt, der gegenüber dem ersten Abschnitt 20.1 nach hinten gedreht ist. Die Breite der Kulisse 14 ist im Ausführungsbeispiel gleichbleibend.

In der Kulisse 14 ist der rechteckige Kulissenstein 15 verschieblich angeordnet, der sich in der Gebrauchsstellung mit parallel zur Kulisse 14 ausgerichteten Seitenflächen im ersten Abschnitt 20.1 befindet, in der Sicherheitsstellung jedoch in den zweiten Abschnitt 20.2 verschoben wird. Bei dieser Verschiebung erfährt der Kulissenstein 15 zusätzlich eine Drehbewegung. Abweichend von der in Fig. 2 und 3 dargestellten Ausführung vergrößert der rechteckige Kulissenstein 15 bei dieser Drehung seine Breite in der Kulisse 14, wodurch er in dieser arretiert. Diese Wirkung kann so gestaltet werden, dass sich der Kulissenstein 15 nur leicht in der Kulisse 14 verklemmt und erneut in die Position nach Fig. 4 verschiebbar ist. In Abhängigkeit von den Verschiebekräften und der geometrischen Ausbildung der Führung ist jedoch auch eine formschlüssige Arretierung herbeiführbar, bei der der Kulissenstein 15 mit seinen Kanten die Kulisse 14 bei Erreichen der Sicherheitsstellung rastenartig verformt.

Bei der gattungsgemäßen Rückenlehne nach Fig. 6 und 7 werden die Führungsstangen 5, an denen das Polsterteil 4 der Kopfstütze 3 befestigt ist, unmittelbar über je zwei zueinander beabstandete Kulissensteine 15.1 und 15.2 in konvex gekrümmten Kulissen 14 geführt. Unter der Wirkung einer Krafterzeugungseinrichtung 11 in Form eines pyrotechnischen Zündsatzes 21 verschieben sich die Kulissensteine 15 in der bogenförmigen Kulisse 14, wodurch sowohl eine Höhenverlagerung als auch eine Drehbewegung des Polsterteils 4 herbeigeführt werden. Die Anpassung an die Größe des Insassen kann bei dieser Kopfstütze 3 durch ein Verschieben des Polsterteils 4 relativ zu den Führungsstangen 5 vorgenommen werden.

Eine letzte Ausbildung einer gattungsgemäßen Rückenlehne zeigen die Figuren 8 und 9. Die Führungsstangen 5 der dort abgebildeten Kopfstütze 3 werden von Kulissensteinen 15.1 und 15.2 gehalten, die jeweils in gesonderten Kulissen 14.1 und 14.2 geführt werden. Die Ausnehmungen der Kulissen 14.1 und 14.2 verlaufen gegenüber einer die Kulissenstein 15.1 bzw. 15.2 in Gebrauchsstellung verbindenden gedachten Geraden G zumindest bereichsweise schräg und zueinander versetzt und entgegengerichtet. Durch die untere Kulisse 14.2 wird das untere Ende der Führungsstange 5 beim Verschieben in die Sicherheitsstellung nach hinten ausgelenkt, das obere Ende der Führungsstange 5 durch die spiegelbildliche Lage der oberen Kulisse 14.1 hingegen nach vorne. Die Kopfstütze 3 vollzieht bei einer Verschiebung nach oben, die durch eine Krafterzeugungseinrichtung 11 in Form einer Zugfeder 22 initiiert wird, eine Schwenkbewegung zum Kopf 19 des Insassen. Die Kulissen 14 weisen ferner in Richtung der Verschiebung von der Gebrauchs- in die Sicherheitsstellung eine Verengung auf, so dass sich die Kutissensteine 15 bei der Verschiebung in der Kulisse 14 verklemmen und die Kopfstütze 3 in der Sicherheitsstellung arretieren.

### Bezugszeichen

- 1: Rückenlehne
- 2: Rahmenstruktur
- 3: Kopfstütze
- 4: Polsterteil
- 5: Führungsstange
- 6: Führungshülse
- 7: Ausnehmung
- 8: Raste
- 9: Strebe
- 10: Arretiereinrichtung
- 11: Krafterzeugungseinrichtung
- 12: Druckfeder
- 13: Blechplatten
- 14: Kulisse
- 15: Kulissenstein
- 16: Steuereinrichtung
- 17: Crash-Sensor
- 18: Aktivator
- 19: Kopf
- 20: Abschnitt
- 21: pyrotechnischer Zündsatz
- 22: Zugfeder

- G: Gerade

## Patentansprüche

1. Rückenlehne (1) für einen Fahrzeugsitz, mit einer unter der Wirkung einer bei einer Unfallsituation wirkenden Krafterzeugungseinrichtung (11) von einer Gebrauchslage in eine Sicherheitsstellung verstellbaren Kopfstütze (3), welche über in die Rückenlehne ragende Halteelemente mit derselben verbunden ist, wobei die Halteelemente unter der Wirkung der Krafterzeugungseinrichtung (11) gegenüber der Rückenlehne (1) mittels mindestens einer Kulissenführung aus einer Kulisse (14) und in dieser geführtem Kulissenstein (15) verschiebbar sind, **dadurch gekennzeichnet, dass** der Kulissenstein (15) bei der Verschiebung von der Gebrauchsstellung in die Sicherheitsstellung eine Drehbewegung ausführt, infolge derer sich seine auf die Kulisse gerichtete radiale Erstreckung vergrößert, wodurch der Kulissenstein kraft- oder formschlüssig in der Kulisse (14) arretierbar ist.

2. Rückenlehne nach Anspruch 1, **dadurch gekennzeichnet, dass** der Kulissenstein (15) rechteckig ausgebildet ist.

3. Rückenlehne nach Anspruch 1 oder 2, **dadurch gekennzeichnet, dass** die Kulisse (14) von den Kanten des Kulissensteins (15) bei Erreichen der Sicherheitsstellung rastenartig verformbar ist.

4. Rückenlehne nach einem der Ansprüche 1 bis 3, **dadurch gekennzeichnet, dass** die Kulisse (14) in Verschieberichtung einen ersten, im Wesentlichen vertikal verlaufenden Abschnitt (20.1) aufweist, an den sich oben ein gegenüber dem ersten Abschnitt (20.1) schräg verlaufender zweiter Abschnitt (20.2) anschließt.

5. Rückenlehne nach Anspruch 4, **dadurch gekennzeichnet, dass** der zweite Abschnitt (20.2) gegenüber dem ersten Abschnitt (20.1) nach hinten gedreht ist.

6. Rückenlehne nach einem der vorhergehenden Ansprüche, **dadurch gekennzeichnet, dass** sich die Kulisse (14) in Verschieberichtung verjüngt.

7. Rückenlehne nach einem der Ansprüche 1 bis 6, **dadurch gekennzeichnet, dass** die Halteelemente jeweils mittels einer Durchführung durch die Rahmenstruktur und einer hierzu beabstandete Kulissenführung in der Rückenlehne (1) verschiebbar sind, wobei die Kulisse (14) gegenüber einer den Kulissenstein (15) in der Gebrauchsstellung mit der Durchführung verbindenden Geraden G zumindest bereichsweise schräg verläuft.

8. Rückenlehne nach Anspruch 7, **dadurch gekennzeichnet, dass** die Durchführung oberhalb der Kulissenführung angeordnet ist und die Kulisse (14) gegenüber der Geraden G nach hinten gedreht verläuft.

9. Rückenlehne nach einem der vorhergehenden Ansprüche, **dadurch gekennzeichnet, dass** die Halteelemente mindestens zwei über eine Strebe (9) miteinander verbundene Führungsstangen (5) umfassen, wobei die Krafterzeugungseinrichtung (11) einerseits an der Strebe und andererseits an der Rahmenstruktur (2) der Rückenlehne (1) angreift.

10. Rückenlehne nach einem der Ansprüche 1 bis 8, **dadurch gekennzeichnet, dass** die Halteelemente mindestens zwei in Führungshülsen (6) längsverschieblich und feststellbar geführte Führungsstangen (5) aufweist, wobei die Führungshülsen über eine Strebe (9) miteinander verbunden sind und Krafterzeugungseinrichtung (11) einerseits an der Strebe und andererseits an der Rahmenstruktur (2) der Rückenlehne (1) angreift.

11. Rückenlehne nach einem der vorhergehenden Ansprüche, **dadurch gekennzeichnet, dass** die Kulissen (14) der Kulissenführung jeweils mit der Rahmenstruktur (2) der Rückenlehne (1) und die Kulissensteine (15) jeweils mit den Halteelementen verbunden sind.

12. Rückenlehne nach einem der vorhergehenden Ansprüche, **dadurch gekennzeichnet, dass** die Krafterzeugungseinrichtung (11) ein mittels einer Arretiereinrichtung (10) unter Vorspannung arretierbares Federelement, insbesondere eine Zug- oder Druckfeder (12), (22) umfasst.

13. Rückenlehne nach Anspruch 12, **dadurch gekennzeichnet, dass** die Arretiereinrichtung (10) mittels eines pyrotechnischen Aktivators (18) lösbar ist.

14. Rückenlehne nach einem der Ansprüche 12, **dadurch gekennzeichnet, dass** die Arretiereinrichtung (10) mittels elektromagnetischen Aktivators lösbar ist.

15. Rückenlehne nach einem der Ansprüche 1 bis 11, **dadurch gekennzeichnet, dass** die Krafterzeugungseinrichtung (11) einen Druckgasspeicher umfasst.

16. Rückenlehne nach einem der Ansprüche 1 bis 11, **dadurch gekennzeichnet, dass** die Krafterzeugungseinrichtung (11) einen pyrotechnischen Zündsatz (21) umfasst.

## Claims

1. Backrest (1) for a vehicle seat, having a head restraint (3) which can be adjusted from an in-use position into a safety position under the action of a force-generating device (11) which is effective in an accident situation, said head restraint being connected to the backrest via retaining elements protruding into the backrest, the retaining elements being displaceable relative to the backrest (1) under the action of the force-generating device (11) by means of at least one slotted-guide mechanism comprising a slotted guide (14) and a sliding block (15) guided in the latter, **characterized in that** the sliding block (15), when displaced from the in-use position into the safety position, executes a rotational movement, as a consequence of which its radial extent directed toward the slotted guide is enlarged thus enabling the sliding block to be locked in a frictional or form-fitting manner in the slotted guide (14).

2. Backrest according to Claim 1, **characterized in that** the sliding block is of rectangular design.

3. Backrest according to Claim 1 or 2, **characterized in that** the slotted guide (14) can be deformed by the edges of the sliding block (15) in the manner of a catch when the safety position is reached.

4. Backrest according to one of Claims 1 to 3, **characterized in that** the slotted guide (14) has, in the direction of displacement, a first section (20.1) which runs essentially vertically and is adjoined at the top by a second section (20.2) which runs obliquely relative to the first section (20.1).

5. Backrest according to Claim 4, **characterized in that** the second section (20.2) is rotated to the rear relative to the first section (20.1).

6. Backrest according to one of the preceding claims, **characterized in that** the slotted guide (14) tapers in the direction of displacement.

7. Backrest according to one of Claims 1 to 6, **characterized in that** the retaining elements can be displaced in each case through the frame structure by means of a leadthrough and a slotted-guide mechanism, which is spaced apart from it, in the backrest (1), the slotted guide (14) running obliquely, at least in some regions, relative to a straight line G connecting the sliding block (15) to the leadthrough in the in-use position.

8. Backrest according to Claim 7, **characterized in that** the leadthrough is arranged above the slotted-guide mechanism and the slotted guide (14) runs rotated to the rear relative to the straight line G.

9. Backrest according to one of the preceding claims, **characterized in that** the retaining elements comprise at least two guide rods (5) which are connected to each other via a strut (9), the force-generating device (11) engaging, on the one hand, on the strut and, on the other hand, on the frame structure (2) of the backrest (1).

10. Backrest according to one of Claims 1 to 8, **characterized in that** the retaining elements have at least two guide rods (5) which are guided in a longitudinally displaceable and fixable manner in guide sleeves (6), the guide sleeves being connected to each other via a strut (9) and the force-generating device (11) engaging, on the one hand, on the strut and, on the other hand, on the frame structure (2) of the backrest (1).

11. Backrest according to one of the preceding claims, **characterized in that** the slotted guides (14) of the slotted-guide mechanism are connected in each case to the frame structure (2) of the backrest (1) and the sliding blocks (15) are connected in each case to the retaining elements.

12. Backrest according to one of the preceding claims, **characterized in that** the force-generating device (11) comprises a spring element, in particular a tension spring or compression spring (12), (22), which can be locked under pretension by means of a locking device (10).

13. Backrest according to Claim 12, **characterized in that** the locking device (10) can be released by means of a pyrotechnic activator (18).

14. Backrest according to one of claims 12, **characterized in that** the locking device (10) can be released by means of an electromagnetic activator.

15. Backrest according to one of claims 1 to 11, **characterized in that** the force-generating device (11) comprises a compressed-gas store.

16. Backrest according to one of claims 1 to 11, **characterized in that** the force-generating device (11) comprises a pyrotechnic igniting charge (21).

## Revendications

1. Dossier (1) pour un siège de véhicule, comprenant un appui-tête (3) pouvant être réglé d'une position d'utilisation dans une position de sécurité sous l'effet d'un dispositif de production de force (11) agissant dans une situation d'accident, lequel appui-tête (3) est connecté par le biais d'éléments de fixation pénétrant dans le dossier à ce dernier, les éléments de fixation pouvant être déplacés sous l'effet du dispositif de production de force (11) par rapport au dossier (1) au moyen d'au moins un guide à coulisse constitué d'une coulisse (14) et d'un coulisseau (15) guidé dans celle-ci, **caractérisé en ce que** le coulisseau (15), lors du déplacement de la position d'utilisation dans la position de sécurité, effectuant un mouvement de rotation, suite auquel son étendue radiale orientée vers la coulisse augmente, de sorte que le coulisseau puisse être bloqué dans la coulisse (14) par engagement par force ou par coopération de forme.

2. Dossier selon la revendication 1, **caractérisé en ce que** le coulisseau (15) est réalisé sous forme rectangulaire.

3. Dossier selon la revendication 1 ou 2, **caractérisé en ce que** la coulisse (14) peut être déformée sous forme crantée par les bords du coulisseau (15) lorsque la position de sécurité est atteinte.

4. Dossier selon l'une quelconque des revendications 1 à 3, **caractérisé en ce que** la coulisse (14) présente dans la direction de déplacement une première portion (20.1) s'étendant essentiellement verticalement, à laquelle se raccorde en haut une deuxième portion (20.2) s'étendant obliquement par rapport à la première portion (20.1).

5. Dossier selon la revendication 4, **caractérisé en ce que** la deuxième portion (20.2) est tournée vers l'arrière par rapport à la première portion (20.1).

6. Dossier selon l'une quelconque des revendications précédentes, **caractérisé en ce que** la coulisse (14) se rétrécit dans la direction de déplacement.

7. Dossier selon l'une quelconque des revendications 1 à 6, **caractérisé en ce que** les éléments de fixation peuvent être déplacés à chaque fois au moyen d'un passage à travers la structure de cadre et d'un guide à coulisse espacé à cet effet dans le dossier (1), la coulisse (14) s'étendant au moins en partie en biais par rapport à une droite G reliant le coulisseau (15) dans la position d'utilisation au passage.

8. Dossier selon la revendication 7, **caractérisé en ce que** le passage est disposé au-dessus du guide à coulisse et la coulisse (14) s'étend de manière tournée vers l'arrière par rapport à la droite G.

9. Dossier selon l'une quelconque des revendications précédentes, **caractérisé en ce que** les éléments de fixation comprennent au moins deux tiges de guidage (5) reliées l'une à l'autre par le biais d'une entretoise (9), le dispositif de production de force (11) venant en prise d'une part avec l'entretoise et d'autre part avec la structure de cadre (2) du dossier (1).

10. Dossier selon l'une quelconque des revendications 1 à 8, **caractérisé en ce que** les éléments de fixation présentent au moins deux tiges de guidage (5) guidées de manière déplaçable en longueur et de manière à pouvoir être fixées dans des manchons de guidage (6), les manchons de guidage étant reliés les uns aux autres par une entretoise (9) et le dispositif de production de force (11) venant en prise d'une part avec l'entretoise et d'autre part avec la structure de cadre (2) du dossier (1).

11. Dossier selon l'une quelconque des revendications précédentes, **caractérisé en ce que** les coulisses (14) du guide à coulisse sont reliées à chaque fois à la structure de cadre (2) du dossier (1) et le coulisseau (15) est relié à chaque fois aux éléments de fixation.

12. Dossier selon l'une quelconque des revendications précédentes, **caractérisé en ce que** le dispositif de production de force (11) comprend un élément de ressort pouvant être bloqué sous précontrainte au moyen d'un dispositif de blocage (10), notamment un ressort de traction ou de compression (12), (22).

13. Dossier selon la revendication 12, **caractérisé en ce que** le dispositif de blocage (10) peut être libéré au moyen d'un actionneur pyrotechnique (18).

14. Dossier selon l'une quelconque des revendications 12, **caractérisé en ce que** le dispositif de blocage (10) peut être libéré au moyen d'un actionneur électromagnétique.

15. Dossier selon l'une quelconque des revendications 1 à 11, **caractérisé en ce que** le dispositif de production de force (11) comprend un accumulateur de gaz sous pression.

16. Dossier selon l'une quelconque des revendications 1 à 11, **caractérisé en ce que** le dispositif de production de force (11) comprend un élément d'allumage pyrotechnique (21).
